# EUROPÄISCHE PATENTSCHRIFT

(11) **EP 1 044 873 B1**
(45) Veröffentlichungstag und Bekanntmachung des Hinweises auf die Patenterteilung: **30.06.2004**
(21) Anmeldenummer: 99890126.8
(22) Anmeldetag: 14.04.1999
(51) Int. Cl.: B63B 1/40, B63B 1/18, B63B 1/04, B63B 1/38

(54) **Unterwasserkörper eines Schiffes**
Underwater hull of a ship
Oeuvres vives d'une coque de bateau

(43) Veröffentlichungstag der Anmeldung: 18.10.2000
(73) Patentinhaber: Alsphere Engineering Schiffbau und Architektur GmbH, 1010 Wien (AT)
(72) Erfinder: Eder, Theodor Dipl.-Ing., 2380 Perchtoldsdorf (AT)
(74) Vertreter: Casati, Wilhelm, Dipl.-Ing.

(56) Entgegenhaltungen:
- WO-A-95/09102
- DE-A- 2 812 616
- DE-A- 19 847 861
- FR-A- 2 502 104
- US-A- 4 870 919
- US-A- 5 211 126
- US-A- 5 402 743
- PATENT ABSTRACTS OF JAPAN vol. 097, no. 011, 28. November 1997 (1997-11-28) -& JP 09 193884 A (YAMAMOTO TASABURO), 29. Juli 1997 (1997-07-29)

## Beschreibung

Die Erfindung betrifft einen Schiffskörper, an dessen Unterseite mindestens ein längsgerichteter, zur Längsachse des Schiffes symmetrischer Verdrängungskörper vorgesehen ist, an den zumindest an beiden Längsseiten, gegebenenfalls rundherum, Gleitflächen anschließen, wobei die vom Verdrängungskörper verdrängte Wassermenge gewichtsmäßig im wesentlichen dem Gesamtgewicht des Schiffes entspricht, sodaß die Gleitflächen im wesentlichen horizontal und in oder in der Nähe der Wasseroberfläche liegen.

Bei einem Schiffskörper der vorgenannten Art wurde es bekannt (US 3 698 342 A), die Gleitflächen als ebene Flächen auszubilden. Dadurch kommt es aber bei Fahrt des Schiffes durchs Wasser im wesentlichen zu der üblichen Ausbildung von Wellen, ohne daß ein besonderer Effekt erreicht wird.

Nicht nur, daß die Wellenbildung Antriebsenergie verschlingt, entstehen insbesondere, wenn das Schiff im verbauten Gebiet fährt, Beeinträchtigungen der Uferbauten. Handelt es sich dabei um Gebäude, so treten an diesen die bekannten Beschädigungen auf (Venedig).

Hier Abhilfe zu schaffen, ist eines der Ziele der Erfindung. Erreicht wird dies bei einem Schiffskörper der eingangs erwähnten Art, wenn gemäß der Erfindung die Gleitflächen in Längs- und gegebenenfalls auch in Querrichtung des Schiffskörpers wellenförmig ausgebildet sind, wobei die Wellung der Gleitflächen um ca. 180° zu den vom Verdrängungskörper erzeugten Eigenwellen verschoben ist, sodaß die Eigenwellen des Verdrängungskörpers bei Fahrt durchs Wasser nahezu gelöscht werden.

Durch die erfindungsgemäße Gestaltung der Gleitflächen des Schiffskörpers gelingt es, die Wellenbildung und damit die darauf zurückzuführenden Unzukömmlichkeiten zu vermindern bzw. zu beseitigen. Insbesondere gelingt eine beträchtliche Einsparung an Antriebsenergie für das gesamte Schiff.

Dabei ist zu berücksichtigen, daß bei Fahrt eines Schiffes durch ruhiges Wasser dieses im wesentlichen drei Gegenkräfte zu überwinden hat. Die geringste davon ist der Luftwiderstand, wesentlich stärker ist der Reibungswiderstand der Unterwasserfläche, meist am gravierendsten ist der Formwiderstand, welcher durch die jeweilige Gestaltung des Unterwasserschiffes gegeben ist. Dieser Form- oder Restwiderstand setzt sich aus dem Wellenwiderstand, dem Druckwiderstand und dem induzierten Widerstand zusammen, wobei letzterer abdriftbedingt und gering ist.

Ein verdrängender, nicht gleitender Schiffskörper bildet bei Fahrt durchs Wasser bekanntlich Wellen, deren Entstehung Energie kostet. Die Wellenlänge dabei ist bei geringer Geschwindigkeit zunächst klein (meistens schön ersichtlich an der Bordwand des Schiffes) und nimmt mit der Geschwindigkeit zu, bis sie zuletzt gleich der Wasserlinienlänge des Schiffes ist. Ab dann steigt der Widerstand eines Verdrängers enorm.

Der Erfindung liegt folgende Idee zugrunde: Der Schiffskörper soll zunächst ohne Rücksichtnahme auf die gewünschte Breite des Schiffes aus einem möglichst stromlinienförmigen, längsgerichteten Teil bestehen, der an sich schon einen kleinen Widerstand hat und dessen Volumen der gesamten Verdrängung des Schiffes entspricht. In oder in der Nähe der Wasserlinie des Schiffes schließen an diesen Verdrängungskörper links und rechts und auch etwas nach vorne und hinten im wesentlichen horizontale Gleitflächen an.

An den äußeren Rändern können sich senkrecht nach unten stehende, im Vergleich zur Tiefe des Verdrängungskörpers schmale, parallele Leisten befinden.

Natürlich kann der Unterwasserkörper auch aus mehreren solchen Verdrängungskörpern bestehen, zwischen welchen und an den äußeren Rändern von diesen sich die Gleitflächen befinden.

Betrachtet man den Verdrängungskörper alleine, also ohne die Gleitflächen, bei Fahrt durchs Wasser, dann bildet er je nach Geschwindigkeit Wellen mit bestimmter Länge. Die anschließenden Gleitflächen sind nun erfindungsgemäß so in Längs- und gegebenenfalls in Querrichtung wellenmäßig geformt, daß durch ihren Einfluß die Wellen des Verdrängungskörpers gelöscht werden und auch sonst keine Wellen mehr entstehen.

Schlepptests mit erfindungsgemäß gestalteten Schiffsmodellen zeigten beispielsweise, daß eine gegenüber der Tiefe des Verdrängungskörpers nur geringfügig tiefe Wellung der Gleitflächen, welche um ca. 180° zu den Eigenwellen des Verdrängungskörpers in Längsrichtung verschoben ist, günstige Ergebnisse im Sinne der erfindundungsgemäßen Aufgabenstellung bringt. Anschließende Hochrechnungen von Schlepptests mit drei verschiedenen Modellen auf entsprechend große Schiffe, welche alle 14 m lang und 4,5 m breit sind und 21 Tonnen Verdrängung haben, haben bei einer Fahrtschwindigkeit von 25 km pro Stunde folgende notwendige Schleppleistungen ergeben:

| | |
|---|---|
| Erfindungsgemäß gestaltetes Boot (DG-Boot) | 111 kW |
| Übliches Gleitboot | 197 kW |
| Übliches Verdrängerboot | 245 kW |

Viele Nutzfahrzeuge (Fischereiboote etc.) bewegen sich normalerweise in Bereichen um diese Geschwindigkeit.

Die erfindungsgemäße Gestaltung des Schiffskörpers hat naturgemäß eine gegenüber fast allen konventionellen Schiffsformen größere Oberfläche und dementsprechend einen höheren Reibungswiderstand. Trotzdem ist der ) Gesamtwiderstand um vieles geringer, wodurch eine Einsparung an Antriebsenergie erzielt werden kann.

Zum Verringern des Reibungswiderstandes können zusätzlich folgende Maßnahmen ergriffen werden:

Wie angeführt, sind an den parallelen Seitenrändern des Unterwasserschiffes schmale senkrecht stehende Längsleisten montiert, welche schwach in das Wasser eintauchen und so seitliches Spritzwasser vermeiden und die Kursstabilität des Schiffes erhöhen. Dadurch wird auch ein gezieltes Einblasen von Preßluft mittels Düsen, welche sich im vorderen Teil der Gleitflächen befinden, ermöglicht, um so durch Ablösen der Wassergrenzschicht an den Gleitflächen deren Reibungswiderstand zu vermindern.

Zusammengefaßt ergeben sich durch diese Erfindung gegenüber allen bisherigen Unterwasserformen von Schiffen folgende Vorteile:
1. Wesentlich geringerer Gesamtwiderstand bei Fahrt durchs Wasser in allen Geschwindigkeitsbereichen gegenüber konventionellen Verdrängerbooten.
2. Wesentlich geringerer Gesamtwiderstand bei Fahrt durchs Wasser gegenüber konventionellen Gleitbooten im Geschwindigkeitsbereich vor dem Gleiten.
3. Nahezu keine Wellenbildung bei Fahrt durchs Wasser, Schonung der Ufer und der Gebäude am Wasser, wie z.B. in Venedig.

In besonderer Gestaltung des erfindungsgemäßen Schiffskörpers, kann dieser zum Ausgleich von Gewichtsschwankungen des Schiffes mit Ausgleichstanks versehen sein.

Die Erfindung wird nachstehend anhand der Zeichnung näher erläutert. Es zeigen:

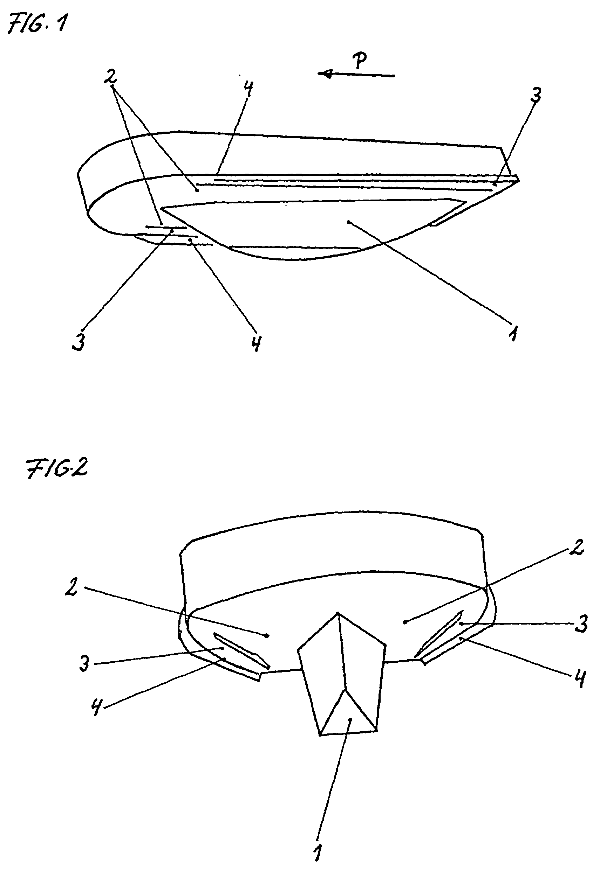

Fig. 1 eine schaubildliche Darstellung eines erfindungsgemäßen Schiffskörpers in Seitenansicht,

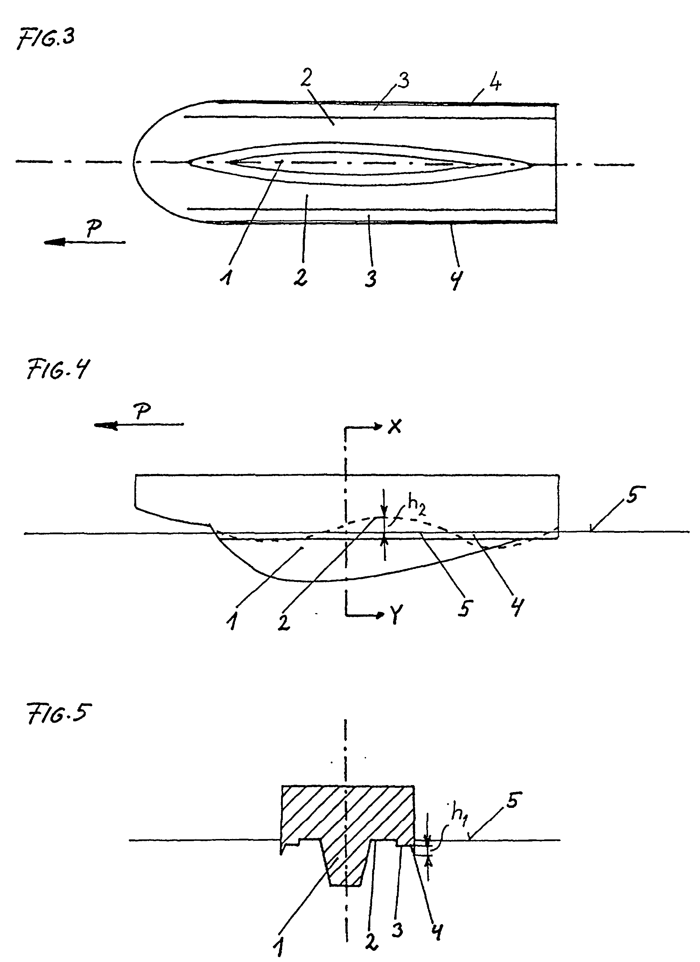

Fig. 2 denselben ebenfalls schaubildlich von vorne,
Fig. 3 diesen in Unteransicht,
Fig. 4 in Seitenansicht,
Fig. 5 einen Schnitt entlang der Linie X-Y aus Fig. 4,
Fig. 6 einen Längsschnitt durch einen Verdrängungskörper mit erzeugter Wellenbildung,
Fig. 7 eine Draufsicht auf den Verdrängungskörper der Fig. 6,
Fig. 8 einen Längsschnitt durch einen Schiffskörper mit Verdrängungskörper, und
Fig. 9 eine Unteransicht des Schiffskörpers mit Verdrängungskörper der Fig. 8 mit den seitlichen Gleitflächen.

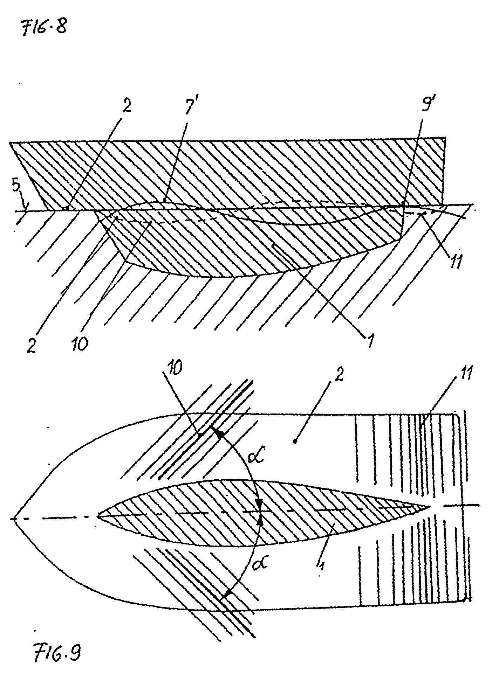

In der Zeichnung bezeichnet 1 den Verdrängungskörper. An diesen schließen seitlich Gleitflächen 2 mit Wellungen in Längs- und/oder Querrichtung an, wobei die wellenförmige Ausbildung in Längsrichtung am deutlichsten der strichlierten Darstellung in Fig. 4 und 8 zu entnehmen ist. Nach außen kann unter Umständen jede Gleitfläche 2 in Gleitbänder 3 übergehen, welche ebenflächig gestaltet sind. Gegebenenfalls können auch vom Außenrand der Gleitbänder 3 nach unten Leisten 4 abstehen, deren Höhe h1 etwa gleich ist der Wellenamplitude h2 der seitlichen Gleitflächen 2. In der Zeichnung bezeichnet 5 die Wasserlinie und der Pfeil P die Fahrtrichtung. Zwischen den Leisten 4 und dem Verdrängungskörper 1 bilden sich unter Wasser seitlich und nach oben geschlossene Längskammern, in welche vorne durch Düsen Luft eingepreßt werden kann, die dann bei Fahrt durch das Wasser über die ganze Schiffslänge erhalten bleibt und die Reibung durch Ablösen der Grenzschicht vermindert. Die Gleitflächen 2 und 3 sollen möglichst in der Wasseroberfläche liegen, was notfalls mit Hilfe von Ausgleichstanks sichergestellt werden kann.

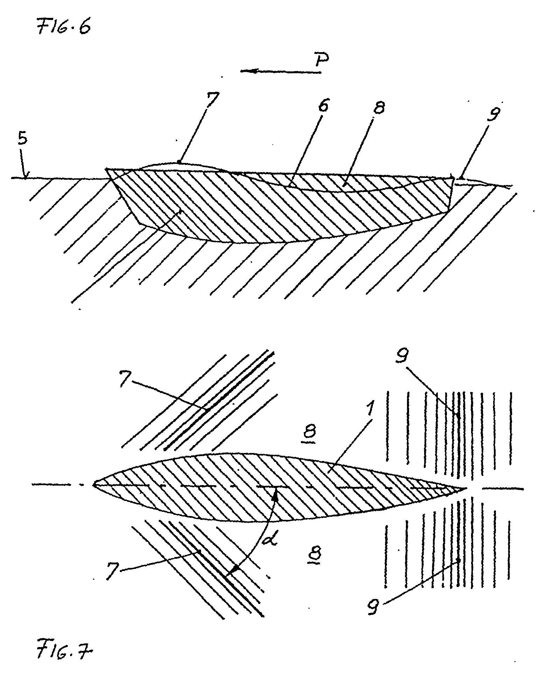

In den Fig. 6 und 7 ist lediglich der Verdrängungskörper 1 des Unterwasserskörpers mit dem bei Fahrt (Fahrtrichtung P) durch das Wasser vom Verdrängungskörper 1 erzeugten Wellenbild dargestellt, wobei in Fig. 6 die erzeugte Eigenwelle 6 im Längsschnitt gezeigt ist. Ein erster Wellenberg 7 verläuft gegenüber der Längsachse des Unterwasserkörpers unter einem Winkel α (Fig. 7) schräg nach außen und hinten weg. Nach einem Wellental 8 ist ein sich anschließender zweiter Wellenberg 9 beispielhaft dargestellt.

In den Fig. 8 und 9 ist der Unterwasserkörper mit dem Verdrängungskörper 1 und den Gleitflächen 2 dargestellt. Die beiden Gleitflächen 2 beidseits des Verdrängungskörpers 1 weisen ausbauchende Wellungen 10 und 11 an denjenigen Stellen auf, an denen die Wellenberge 7' bzw. 9' vom Verdrängungskörper 1 alleine erzeugt werden, sind diesen somit entgegengesetzt oder um 180° in Längsrichtung verschoben ausgebildet. In der Querrichtung folgt die Wellung der Gleitflächen 2 dem Winkel α. Durch diese Gestaltung der Gleitflächen 2 wird eine Wellenbildung weitgehend vermieden.

## Patentansprüche

1. Schiffskörper, an dessen Unterseite mindestens ein längsgerichteter, zur Längsachse des Schiffes symmetrischer Verdrängungskörper (1) vorgesehen ist, an den zumindest an beiden Längsseiten, gegebenenfalls rundherum, Gleitflächen (2) anschließen, wobei die vom Verdrängungskörper verdrängte Wassermenge gewichtsmäßig im wesentlichen dem Gesamtgewicht des Schiffes entspricht, sodaß die Gleitflächen im wesentlichen horizontal und in oder in der Nähe der Wasseroberfläche liegen, **dadurch gekennzeichnet, daß** die Gleitflächen (2) in Längsund gegebenenfalls auch in Querrichtung des Schiffskörpers wellenförmig ausgebildet sind, wobei die Wellung der Gleitflächen (2) um ca. 180° zu den vom Verdrängungskörper (1) erzeugten Eigenwellen verschoben ist, sodaß die Eigenwellen des Verdrängungskörpers (1) bei Fahrt durchs Waser nahezu gelöscht werden.

2. Schiffskörper nach Anspruch 1, **dadurch gekennzeichnet, daß** der Schiffskörper zum Ausgleich von Gewichtsschwankungen des Schiffes mit Ausgleichstanks versehen ist.

## Claims

1. Ship's hull, having on its underside, running lengthwise and symmetrical to the longitudinal axis of the ship, at least one displacement section (1), having next to it gliding surfaces (2), at least on both longitudinal sides and, if applicable, all around it, whereby the body of water displaced by the displacement section, as regards its weight, essentially corresponds to the overall weight of the ship, so that the gliding surfaces lie essentially horizontally and at or in the vicinity of the water surface, **characterized in that** the gliding surfaces (2), running lengthwise and, if applicable, crosswise in relation to the ship's hull, are shaped in a wavelike manner, whereby the wave from the gliding surfaces (2) is moved at about 180° to the waves produced by the displacement section (1) itself, so that the waves produced by the displacement section (1) itself, as the ship moves through the water, are nearly eliminated.

2. Ship's hull according to claim 1, **characterized in that** the ship's hull is provided with equalization tanks to equalize the fluctuations of the ship's weight.

## Revendications

1. Coque de bateau, sur la face inférieure de laquelle est prévu au moins un corps de déplacement (1) longitudinal, symétrique par rapport à l'axe longitudinal du bateau, auquel se rattachent des surfaces de glissement (2) au moins sur les deux côtés longitudinaux, le cas échéant tout autour, la quantité d'eau déplacée par le corps de déplacement correspondant du point de vue du poids essentiellement au poids total du bateau, si bien que les surfaces de glissement sont placées de manière essentiellement horizontale et dans la surface de l'eau ou à sa proximité, **caractérisée en ce que** les surfaces de glissement (2) sont réalisées sous forme d'ondes dans le sens longitudinal et, le cas échéant, également dans le sens transversal de la coque de bateau, l'ondulation des surfaces de glissement (2) étant décalée d'environ 180° par rapport aux ondes propres produites par le corps de déplacement (1), si bien que les ondes propres du corps de déplacement (1) sont presque éliminées lors de la navigation à travers les eaux.

2. Coque de bateau selon la revendication 1, **caractérisée en ce que** la coque de bateau est munie de réservoirs tampons pour compenser les variations de poids du bateau.
